Europäisches Patentamt

European Patent Office

Office européen des brevets

(19)

(11) Publication number: **0 236 061**
**B1**

(12) **EUROPEAN PATENT SPECIFICATION**

(45) Date of publication of the patent specification:
19.12.90

(51) Int. Cl.⁵: **B60S 1/38**

(21) Application number: **87301631.5**

(22) Date of filing: **25.02.87**

(54) Pivot joint.

(30) Priority: **26.02.86 GB 8604781**

(43) Date of publication of application:
**09.09.87 Bulletin 87/37**

(45) Publication of the grant of the patent:
**19.12.90 Bulletin 90/51**

(84) Designated Contracting States:
**BE DE ES FR IT**

(56) References cited:
**DE-U- 8 515 052**
**FR-A- 2 131 447**
**FR-A- 2 248 175**
**FR-A- 2 437 279**
**FR-A- 2 453 757**
**FR-A- 2 491 847**

(73) Proprietor: **TRICO-FOLBERTH LIMITED, Great West Road, Brentford Middlesex TW8 9HP(GB)**

(72) Inventor: **Frimley, Charles Henry, 25 Redford Road, Windsor Berkshire(GB)**

(74) Representative: **Pedder, James Cuthbert, J.C. Pedder & Co. 38 Norbury Cross, Norbury London SW16 4JQ(GB)**

ACTORUM AG

## Description

This invention relates to a pivot joint which is particularly but not exclusively useful in the manufacture of windscreen wipers.

In the manufacture of windscreen wipers, a number of pivot joints are used, particularly between the various yokes and/or levers of the windscreen wiper blade.

Problems exist in the manufacture of windscreen wipers due to the necessity, very often, of pivoting metal parts together. These joints tend to be noisy and have a tendency to suffer from wear and corrosion. Various proposals have been made for overcoming these problems, for example, by the provision of plastics members between the metal parts of the joints, but these have not proved entirely satisfactory from a manufacturing standpoint although they have worked satisfactorily in use.

One such joint is shown in French Patent Specification No. FR-A 491 847, which joint comprises a plastics joint body of substantially channel shape having interiorly extending pivot projections for engagement in apertures in a channel shaped member adapted to lie, in the region of the joint. The other member of the joint is adapted to lie on and surround the joint body on three sides. The joint body is attached to the said other member by means of a rivet arrangement or by means of four resilient hooks which project through an aperture in the said other member.

The present invention seeks to provide a new and improved pivot joint which is relatively inexpensive to manufacture and use and which overcomes or reduces some or all of the above problems.

According to a first aspect of the invention, there is provided a joint body for a pivot joint for pivotally connecting two members, the joint body being of substantially channel shaped cross-section and having pivot means in the opposite side walls of the channel for pivotal connection with one of the members to be pivoted, said one member being intended to lie within the channel of the joint body and the other member being of channel cross-section at one end in the region of the joint to receive the joint body therein, characterised in that the joint body comprises a first end portion and a second end portion extending longitudinally from the first end portion and including a longitudinally extending tongue in the base of the channel cross-section and carrying a sprung element at its free end, the tongue being adapted to flex inwardly of the channel cross-section and to snap back outwardly with the sprung element engaging a cooperating device as the second end portion is slidably mounted in the longitudinal direction within one end of the other member to be pivoted, which other member is intended to sit on and around more than three sides of the joint body and has inwardly directed lips in the region of the joint so as to slidably mount the joint body in the longitudinal direction of the said other member, and two pairs of abutting surfaces are provided, one surface of each pair being provided on the joint body while the other surface of each pair is provided on the said other member for fixing the joint body longi-

tudinally of the said other member, at least the abutment of one pair of abutments being provided on the sprung element and the cooperating device on the said other member respectively.

The second pair of abutment surfaces may comprise an abutment surface on the joint body engageable with the end surface of the said other member whereby the joint body is fixed in the longitudinal direction between the sprung element and the abutment surface.

According to a second aspect of the invention, there is provided a pivot joint comprising a first member which is of channel section at least at one end, a second member pivotable to said one end of the first member and adapted to sit within the channel section of the first member with clearance and a joint body according to the first aspect of the invention.

Preferably, the inwardly directed lips of the first member define the mouth of the channel section at this point, the mouth of the channel section being at least as wide as the width of the second member whereby the second member can pass into the channel section of the first member through the mouth thereof.

The sprung element of the joint body may comprise a detent carried by the end of a resilient tongue, the detent cooperating with an aperture in the base of the channel section of the first member.

The pivot means on the joint body may comprise a recess which cooperates with a projection on the second member or vice versa. Alternatively, the pivot means on the joint body may comprise an aperture in the joint body through which a pivot pin passes, the pivot pin passing also through one or more apertures in the second member.

In a preferred form of the invention, the first and second members comprise yokes of the blade harness of a windscreen wiper which are to be pivoted together.

The invention will now be described in greater detail, by way of example, with reference to the drawings, in which:

Figure 1 is a perspective view of one form of pivot joint in accordance with the invention;

Figure 2 is a perspective view of the joint body used in the pivot joint of figure 1;

Figure 3 is a sectional view taken on the line III-III of figure 1;

Figure 4 is a sectional view taken on the line IV-IV of figure 3;

Figure 5 is a sectional view taken on the line V-V of figure 3, and

Figure 6 is a sectional view similar to figure 4 but showing a variation in the pivotal connection.

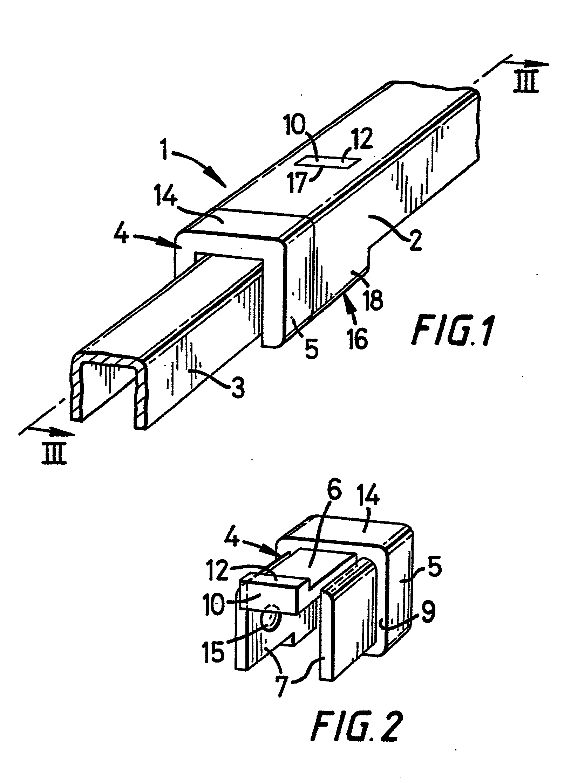

Referring firstly to figures 1 to 5, one form of pivot joint 1 is shown formed between two members 2 and 3, suitably a main and a secondary yoke respectively of a windscreen wiper blade harness. These yokes would normally be made of channel section metal, the secondary yoke usually being pivotally connected in its central region to one end of the main yoke.

The pivot joint 1 comprises a joint body 4 of a suitably resilient plastics material. It is generally of channel section having an end portion 5 from which extend a base tongue 6 and two side tongues 7. The external dimensions of the channel formed by the tongues 6 and 7 are less than the external dimensions of the end portion 5 so that a shoulder 9 is formed at this point for a purpose to be described.

The base tongue 6 is formed at its free end with a projection or detent 10 which effectively enlarges the overall dimensions of the joint body 4 at this point so that the upper surface 12 of the projection or detent 10 lies generally in the same plane as the upper surface 14 of the end portion 5.

Each of the side tongues 7 is provided with an inwardly facing recess 15 of circular tapered shape. Because of the use of a suitably resilient plastics material for the joint body 4, the tongues 6 and 7 are resilient.

The member 2 or main yoke has its pivot end 16 specially formed to cooperate with the joint body 4. Thus it is provided with an aperture 17 for cooperation with the projection or detent 10 on the joint body 4. The member 2 also has depending flanges 18 which are bent inwardly at their ends 19 so as to form inwardly directed lips so that, when assembled together, the member 2 extends around more than three sides of the joint body 4 but the lips do not extend further inwardly than the inner edges of the tongues 7.

The member 3 or secondary yoke is provided with a pair of outwardly projecting trunnions 20 in the form of raised projections produced by forming or by half shears punched in its sidewalls during its formation.

The assembly of the joint shown in figures 1 to 5 will now be described:-

The member 3 or secondary yoke is first pushed up into the channel of the joint body 4 at a position in which, when fully inserted, the trunnions 20 will be aligned with the recesses 15. The maximum dimensions of the member 3 across the trunnions is greater than the interior spaces of the two tongues 7 so that, to insert the member 3, the tongues 7 are splayed apart. This may happen automatically if the trunnions 20 are of a suitable conical form.

Once the trunnions 20 have reached alignment with the recesses 15, the trunnions will enter the recesses 15 allowing the tongues 7 to snap back into their original position. The joint body 4 is now pivotally secured to the member 3.

In order to connect the joint body 4 together with the member 3 to the member 2 or main yoke, the member 3 is offered up to the member 2 and passes between the opposed lips 19 of the flanges 18, care being taken to ensure that the part of the member 3 carrying the joint body 4 remains away from the member 2 but with the tongues 6 and 7 of the joint body 4 directed towards the end of the member 2.

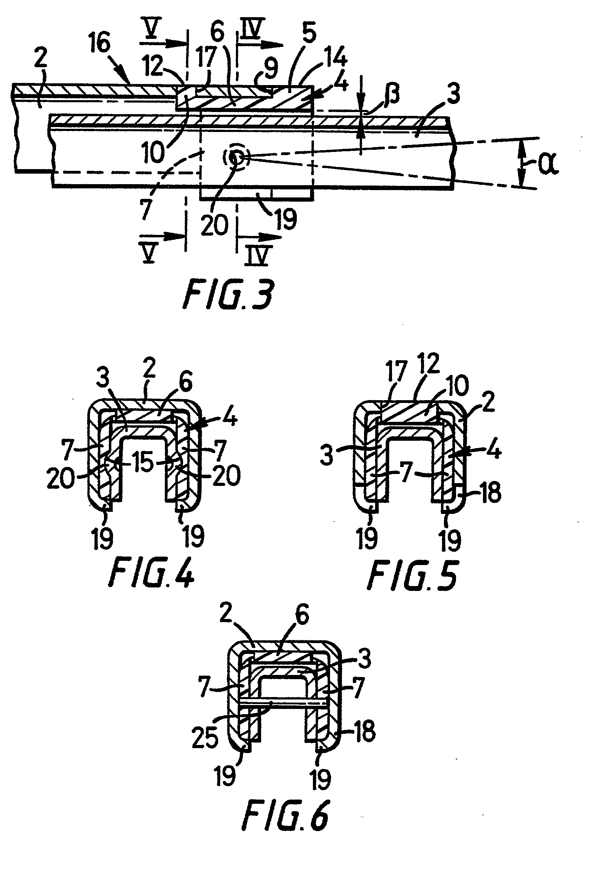

It will be appreciated that while the main part of the member 3 can pass between the opposed lips 19, the joint body is too large to do this. With the appropriate part of the member 3 inside the member 2, the two members can be slid relative to each other so that the tongues 6 and 7 of the joint body 4 approach the free end of the member 2. If the projection 10 is now depressed, and this can happen automatically if the end face of the projection 10 is suitably inclined, it is possible to slide the joint body 4, together with the member 3, into the member 2. As soon as the projection 10 registers with the aperture 17 in the base of the member 2, it will snap thereinto. At this time, the shoulder 9 of the joint body 4 will be in substantial engagement with the end of the member 2. In this way, the joint body 4 will be fixed longitudinally with respect to the member 2 and will be prevented from leaving the member 2 downwardly since it cannot pass between the opposed lips 19. However the member 3 can still pivot with respect to the joint body 4, and thus with respect to the member 2 by a small angle α (figure 3) made possible by the clearance β. This angle is normally sufficient when the joint is used in a windscreen wiper blade harness.

The possibility of pivotal movement is restricted by engagement between the members 2 and 3 and it is for this reason that the clearance β is left. The amount of pivotal movement available can be varied for different applications by using different sizes of clearance.

While in the particular application to windscreen wipers, there is no necessity for the joint to be able to be dissassembled, nevertheless it is possible to dissassemble the above described joint as follows:-

The projection 10 is depressed to bring it clear of the aperture 17, whereupon it is possible to slide the two members 2 and 3 relative to each other so as to remove the joint body 4 from the member 2. Once this has been achieved, the member 3 can readily be extracted from the member 2 through the gap between the opposed lips 19. Then the tongues 7 can be splayed apart to enable the trunnions 20 to be removed from the recesses 15 and the joint body 4 can be pulled off the member 3.

Figure 6 shows a modification in which the arrangement of the trunnions 20 and the recesses 15 is replaced by a pivot pin 25 which passes both through the member 3 and the joint body 4. There is no necessity for the pin 25 to be headed since, once the joint has been assembled, the pin will be retained by the side walls of the member 2.

It will be appreciated that various modifications may be made to the above described embodiments without departing from the scope of the invention. For example, the roles of the trunnions 20 and recesses 15 may be reversed by providing trunnions on the joint body and recesses or even apertures in the member 3.

A further modification can be made by providing a certain amount of longitudinal play at the pivot point and an additional shoulder or shoulders on the member 3 facing the joint. In this way, end forces applied to the joint will be taken up by the shoulder 9 and the end face of the joint body and will prevent the transmission of stress to the pivot itself as this is the weaker part. In the case of the windscreen wipers, this will reduce the possibility of damage to the wiper blades if they should be dropped on their ends.

Although the invention has been described with particular reference to windscreen wipers, the invention is equally applicable to other applications where this type of pivot joint may be useful.

**Claims**

1. A joint body for a pivot joint for pivotally connecting two members (2, 3), the joint body (4) being of substantially channel shaped cross-section and having pivot means (15) in the opposite side walls (7) of the channel for pivotal connection with one (3) of the members (2, 3) to be pivoted, said one member (3) being intended to lie within the channel of the joint body (4) and the other member (2) being of channel cross-section at one end in the region of the joint to receive the joint body (4) therein characterised in that the joint body comprises a first end portion (5) and a second end portion (6, 15, 7, 10) extending longitudinally from the first end portion (5) and including a longitudinally extending tongue (6) in the base of the channel cross-section and carrying sprung element (10) at its free end, the tongue (6) being adapted to flex inwardly of the channel cross-section and to snap back outwardly with the sprung element (10) engaging a cooperating device (17) as the second end portion (6, 7, 10) is slidably mounted in the longitudinal direction within one end of the other member (2) to be pivoted, which other member (2) is intended to sit on and around more than three sides of the joint body (4) and has inwardly directed lips (19) in the region of the joint so as to slidably mount the joint body (4) in the longitudinal direction of the said other member (2), and two pairs of abutting surfaces are provided, one surface of each pair being provided on the joint body (4) while the other surface of each pair is provided on the said other member (2), for fixing the joint body (4) longitudinally of the said other member (2), at least the abutments of one pair of abutments being provide don the sprung element (10) and the cooperating device (17) on the said other member (2) respectively.

2. A joint body as claimed in claim 1, characterised in that the second pair of abutment surfaces comprises an abutment surface (9) on the joint body (4) engageable with the end surface of the said other member (2) whereby the joint body (4) is fixed in the longitudinal direction between the sprung element (10) and the abutment surface (9).

3. A pivot joint comprising a first member (2) which is of channel section at least at one end, a second member (3) pivotable to said one end of the first member (2) and adapted to sit within the channel section of the first member (2) with clearance and a joint body (4) as claimed in claim 1 or 2.

4. A pivot joint as claimed in claim 3, characterised in that the inwardly directed lips (19) of the first member (2) define the mouth of the channel section at this point, the mouth of the channel section being at least as wide as the width of the second member (3) whereby the second member (3) can pass into the channel section of the first member (2) through the mouth thereof.

5. A pivot joint as claimed in claim 3 or 4, characterised in that the sprung element (10) of the joint body (4) comprises a detent (12) carried by the end of a resilient tongue (6), the detent (12) cooperating with an aperture (17) in the base of the channel section of the first member (2).

6. A pivot joint as claimed in claim 5, characterised in that the detent (12) has two abutment surfaces facing in longitudinally opposite directions cooperating with complementary abutment surfaces formed by longitudinally oppositely facing edges of the aperture (17) in the first member (2).

7. A pivot joint as claimed in any one of claims 3 to 6, characterised in that the pivot means (15) on the joint body (4) comprise a recess which cooperates with a projection (20) on the second member (3).

8. A pivot joint as claimed in any one of claims 3 to 6, characterised in that the pivot means (15) on the joint body (4) comprises a projection which cooperates with a recess on the second member (3).

9. A pivot joint as claimed in any one of claims 3 to 6, characterised in that the pivot means (15) on the joint body comprises an aperture in the joint body (4) through which a pivot pin (25) passes, the pivot pin (25) passing also through one or more apertures in the second member (3).

10. A pivot joint as claimed in any one of claims 3 to 9, characterised in that the first and second members (2, 3) comprise yokes or levers of the blade harness of a windscreen wiper which are to be pivoted together.

11. A pivot joint as claimed in claim 10, characterised in that the first member (2) comprises the main yoke of a windscreen wiper blade and the second member (3) comprises a secondary yoke or lever.

**Patentansprüche**

1. Verbindungskörper für eine Drehverbindung zur drehbaren Verbindung von zwei Teilen (2, 3), wobei dieser Verbindungskörper (4) einen im wesentlichen kanalförmigen Querschnitt aufweist und in den entgegengesetzten Seitenwänden (7) des Kanals Dreheinrichtungen (15) zur Drehverbindung mit einem (3) der zu drehenden Teile (2, 3) aufweist, wobei dieses eine Teil (3) innerhalb des Kanals des Drehkörpers (4) liegen soll und das andere Teil (2) an einem Ende im Bereich der Verbindung einen Kanalquerschnitt aufweist, um den Verbindungskörper (4) darin aufzunehmen, dadurch gekennzeichnet, daß der Verbindungskörper einen ersten Endabschnitt (5) und einen zweiten Endabschnitt (6, 15, 7, 10) aufweist, der sich vom ersten Endabschnitt (5) in Längsrichtung erstreckt und in der Basis des Kanalquerschnitts eine sich längs erstreckende Zunge (6) umfaßt und an seinem freien Ende ein federndes Element (10) trägt, wobei diese Zunge (6) so angepaßt ist, daß sie sich in das Innere des Kanalquerschnitts biegt und nach außen zurückschnappt, wobei das federnde Element (10) in eine in Wechselwirkung stehende Einrichtung (17) eingreift, wenn der zweite Endabschnitt (6, 7, 10) innerhalb eines Endes des anderen zu drehenden Teils (2) in Längsrichtung gleitend befestigt ist, wobei das andere Teil (2) auf und um mehr als drei Seiten des Verbindungskörpers (4) herum sitzt und im Bereich der Verbindung nach innen gerichtete Randflächen (19) aufweist, um den Verbindungskörper (4) in Längsrichtung des anderen Teils (2) gleitend anzubringen, und zwei Paar aneinander stoßende Oberflächen vorgesehen sind, wobei eine Oberfläche jedes Paars auf dem Verbindungskörper (4) vorgesehen ist, während die andere Oberfläche jedes Paars auf dem anderen Teil (2) vorgesehen ist, um den Verbindungskörper (4) längs des anderen Teils (2) zu fixieren, wobei mindestens die Widerlager eines Paares dieser Widerlager auf dem federnden Element (10) bzw. der damit in Wechselwirkung stehenden Einrichtung (17) auf dem anderen Teil (2) vorgesehen sind.

2. Verbindungskörper nach Anspruch 1 dadurch gekennzeichnet, daß das zweite Paar der Widerlageroberflächen eine Widerlageroberfläche (9) auf dem Verbindungskörper (4) umfaßt, die in die Endoberfläche des anderen Teils (2) eingreifen kann, wodurch der Verbindungskörper (4) in Längsrichtung zwischen dem federnden Element (10) und der Widerlageroberfläche (9) fixiert ist.

3. Drehverbindung, die ein erstes Teil (2), das an zumindest einem Ende einen Kanalquerschnitt aufweist, ein zweites Teil (3), das an ein Ende des ersten Teils (2) drehbar verbindbar ist und so angepaßt ist, daß es mit einem Abstand innerhalb des Kanalabschnitts des ersten Teils (2) sitzt, und einen Verbindungskörper (4) nach Anspruch 1 oder 2 umfaßt.

4. Drehverbindung nach Anspruch 3, dadurch gekennzeichnet, daß die nach innen gerichteten Randflächen (19) des ersten Teils (2) die Öffnung des Kanalabschnitts an diesem Punkt definieren, wobei die Öffnung des Kanalabschnittes mindestens so breit wie die Breite des zweiten Teils (3) ist, wodurch das zweite Teil (3) durch dessen Öffnung in den Kanalabschnitt des ersten Teils (2) geleitet werden kann.

5. Drehverbindung nach Anspruch 3 oder 4 dadurch gekennzeichnet, daß das federnde Element (10) des Verbindungskörpers (4) eine Feststellvorrichtung (12) umfaßt, die vom Ende der elastischen Zunge (6) getragen wird, wobei diese Feststellvorrichtung (12) mit der Öffnung (17) in der Basis des Kanalabschnitts des ersten Teils (2) in Wechselwirkung steht.

6. Drehverbindung nach Anspruch 5 dadurch gekennzeichnet, daß die Feststellvorrichtung (12) zwei Widerlageroberflächen aufweist, die sich in entgegengesetzten Längsrichtungen gegenüberstehen, die mit den komplementären Widerlageroberflächen in Wechselwirkung stehen, die von den in Längsrichtung entgegengesetzt gegenüberstehenden Kanten der Öffnung (17) im ersten Teil (2) gebildet werden.

7. Drehverbindung nach einem der Ansprüche 3 bis 6 dadurch gekennzeichnet, daß die Dreheinrichtung (15) auf dem Verbindungskörper (4) eine Vertiefung umfaßt, die mit dem Vorsprung (20) auf dem zweiten Teil (3) in Wechselwirkung steht.

8. Drehverbindung nach einem der Ansprüche 3 bis 6 dadurch gekennzeichnet, daß die Dreheinrichtung (15) auf dem Verbindungskörper (4) einen Vorsprung umfaßt, der mit der Vertiefung auf dem zweiten Teil (3) in Wechselwirkung steht.

9. Drehverbindung nach einem der Ansprüche 3 bis 6 dadurch gekennzeichnet, daß die Dreheinrichtung (15) auf dem Verbindungskörper eine Öffnung im Verbindungskörper (4) umfaßt, durch die der Drehstift (25) hindurchgeht, wobei dieser Drehstift (25) ebenfalls durch eine oder mehrere Öffnungen im zweiten Teil (3) hindurchgeht.

10. Drehverbindung nach einem der Ansprüche 3 bis 9 dadurch gekennzeichnet, daß das erste und zweite Teil (2, 3) Bügel oder Hebel der Blattausrüstung eines Scheibenwischers umfassen, die miteinander schwenkbar sind.

11. Drehverbindung nach Anspruch 10 dadurch gekennzeichnet, daß das erste Teil (2) den Hauptbügel des Scheibenwischerblattes umfaßt und das zweite Teil (3) den sekundären Bügel oder Hebel umfaßt.

**Revendications**

1. Corps de joint pour un joint pivotant destiné à la solidarisation pivotante de deux éléments (2, 3), le corps de joint (4) présentant sensiblement une configuration du type canal en coupe transversale et étant muni, dans les parois latérales opposées (7) du canal, de moyens de pivotement (15) en vue de la liaison pivotante avec l'un (3) des éléments (2, 3) devant être animés d'un pivotement, ledit élément précité (3) étant conçu pour reposer à l'intérieur du canal du corps de joint (4), et l'autre élément (2) étant de section transversale du type canal à l'une des extrémités, dans la région du joint, afin de recevoir le corps de joint (4), caractérisé par le fait que le corps de joint comprend une première partie extrême (5) et une seconde partie extrême (6, 15, 7, 10) s'étendant longitudinalement depuis la première partie extrême (5), et présentant une languette (6) qui s'étend longitudinalement dans la base de la section transversale du type canal, et porte un élément élastique (10) à son extrémité libre, la languette (6) étant destinée à fléchir vers l'intérieur de la section du type canal et à rebondir par déclic vers l'extérieur, l'élément élastique (10) venant en prise avec un dispositif associé (17) lorsque la seconde partie extrême (6, 7, 10) est montée coulissante, dans le sens longitudinal, à l'intérieur de l'une des extrémités de l'autre élément (2) devant être animé d'un pivotement, lequel autre élément (2) est conçu pour reposer sur et autour de plus de trois côtés du corps de joint (4), et comporte des lèvres (19) dirigées vers l'intérieur dans la région du joint, en vue du montage coulissant du corps de joint (4) dans le sens longitudinal dudit autre élément (2), et deux paires de surfaces de butée étant prévues, l'une des surfaces de chaque paire étant prévue sur le corps de joint (4), tandis que l'autre surface de chaque paire est prévue sur ledit autre élément (2), de manière à arrêter le corps de joint (4) dans le sens longitudinal dudit autre élément (2), au moins les butées de l'une des paires de butées étant respectivement prévues sur l'élément élastique (10), et sur le dispositif associé (17) sur ledit autre élément (2).

2. Corps de joint selon la revendication 1, caractérisé par le fait que la seconde paire de surfaces de butée comprend une surface de butée (9) sur le corps de joint (4), pouvant venir en prise avec la surface extrême dudit autre élément (2), de sorte que le corps de joint (4) est arrêté dans le sens longitudinal, entre l'élément élastique (10) et la surface de butée (9).

3. Joint pivotant comprenant un premier élément (2) présentant une section du type canal à au moins l'une des extrémités, un second élément (3) pouvant pivoter par rapport à ladite extrémité du premier élément (2) et destiné à reposer, avec jeu, à l'intérieur de la section du type canal du premier élément (2), ainsi qu'un corps de joint (4) selon la revendication 1 ou 2.

4. Joint pivotant selon la revendication 3, caractérisé par le fait que les lèvres (19) du premier élément (2), dirigées vers l'intérieur, délimitent à cet emplacement l'embouchure de la section du type canal, la largeur de l'embouchure de la section du type canal étant au moins égale à celle du second élément (3), de façon que le second élément (3) puisse pénétrer dans la section du type canal du premier élément (2), par l'embouchure de cette dernière.

5. Joint pivotant selon la revendication 3 ou 4, caractérisé par le fait que l'élément élastique (10) du corps de joint (4) comprend un bec à déclic (12) porté par l'extrémité d'une languette élastique (6), le bec à déclic (12) coopérant avec une ouverture (17) pratiquée dans la base de la section du type canal du premier élément (2).

6. Joint pivotant selon la revendication 5, caractérisé par le fait que le bec à déclic (12) comporte deux surfaces de butée tournées dans des directions longitudinalement opposées, coopérant avec des surfaces complémentaires de butée formées par des bords, tournés longitudinalement à l'opposé, de l'ouverture (17) pratiquée dans le premier élément (2).

7. Joint pivotant selon l'une quelconque des revendications 3 à 6, caractérisé par le fait que le moyen de pivotement (15), sur le corps de joint (4), comprend un évidement qui coopère avec une saillie (20) sur le second élément (3).

8. Joint pivotant selon l'une quelconque des revendications 3 à 6, caractérisé par le fait que le moyen de pivotement (15), sur le corps de joint (4), comprend une saillie qui coopère avec un évidement sur le second élément (3).

9. Joint pivotant selon l'une quelconque des revendications 3 à 6, caractérisé par le fait que le moyen de pivotement (15), sur le corps de joint, comprend un orifice qui est ménagé dans le corps de joint (4) et est traversé par une cheville de pivotement (25), la cheville de pivotement (25) traversant également un ou plusieurs orifice(s) pratiqué(s) dans le second élément (3).

10. Joint pivotant selon l'une quelconque des revendications 3 à 9, caractérisé par le fait que les premier et second éléments (2, 3) consistent en des étriers ou leviers de la tringlerie d'un essuie-glace, auxquels des pivotements conjoints doivent être imprimés.

11. Joint pivotant selon la revendication 10, caractérisé par le fait que le premier élément (2) est l'étrier principal d'un balai d'essuie-glace, et le second élément (3) est un étrier ou levier secondaire.

EP 0 236 061 B1

FIG.1

FIG.2

EP 0 236 061 B1

FIG.3

FIG.4

FIG.5

FIG.6